# FASCICULE DE BREVET EUROPEEN

(11) **EP 3 317 163 B1**
(45) Date de publication et mention de la délivrance du brevet: **31.07.2019**
(21) Numéro de dépôt: 16736522.0
(22) Date de dépôt: 10.06.2016
(51) Int. Cl.: B62D 25/08, B62D 35/00

(54) **ENSEMBLE COMPRENANT UNE CLOISON ET UN DEFLECTEUR**
ANORDNUNG MIT EINER ABTRENNUNG UND EINEM DEFLEKTOR
ASSEMBLY COMPRISING A PARTITION AND A DEFLECTOR

(30) Priorité: 03.07.2015 FR 1556291
(43) Date de publication de la demande: 09.05.2018
(73) Titulaire: PSA AUTOMOBILES S.A., 78300 Poissy (FR)
(72) Inventeur: TAVERNIER, Luc, 25470 Trevillers (FR); WOLF, Guillaume, 25750 Aibre (FR); LEPINE, Arnaud, 25420 Bart (FR); DUPERRON, Christophe, 70400 Tavey (FR)
(74) Mandataire: Fernandez, Francis Lionel
(86) Numéro de dépôt international: PCT/FR2016/051409
(87) Numéro de publication internationale: WO 2017/006004

(56) Documents cités:
- FR-A1- 3 008 373
- US-A1- 2014 132 033
- US-A1- 2014 159 429

## Description

L'invention concerne les véhicules automobiles.

Un véhicule automobile comprend une caisse ayant une structure avant définissant un compartiment moteur, délimité notamment par un pare-chocs avant, cette structure avant ayant par exemple une voie haute d'absorption des chocs et une voie basse d'absorption des chocs. La voie haute d'absorption des chocs comprend une traverse supérieure reliée aux extrémités de deux longerons, via des absorbeurs de chocs. De la même manière, la voie basse d'absorption des chocs comprend une traverse inférieure reliée aux extrémités de deux prolonges, via des absorbeurs de chocs. Le véhicule comprend entre autres, au sein du compartiment moteur, un groupe motopropulseur (ci-après référencé par l'acronyme GMP) et un système de refroidissement définissant une façade avant.

Le pare-chocs avant comprend un bouclier (également appelé peau extérieure), ce bouclier dissimulant par exemple une traverse supérieure et une traverse inférieure des voies d'absorption des chocs.

Le véhicule automobile comprend en outre généralement un déflecteur d'air, situé sous le pare-chocs avant, et plus précisément sous le bouclier, ce déflecteur permettant, lorsque le véhicule est en mouvement, d'optimiser la circulation de l'air et ainsi de diminuer la trainée, au bénéfice de la consommation et des émissions polluantes du véhicule. Le déflecteur est généralement réalisé en matériau polymère.

Lors de l'assemblage du véhicule, le déflecteur et le bouclier sont généralement montés sur une structure avant, sur un même poste d'assemblage.

On connaît du document FR 3 008 373, un ensemble comprenant :
- une cloison solidaire d'une caisse et placée entre un système de refroidissement et un bouclier ;
- un déflecteur comprenant un corps positionné sous la cloison;

Plus précisément, dans cet ensemble de l'art antérieur, lors de la fixation du déflecteur, le déflecteur est dans un premier temps maintenu latéralement par rapport à la caisse par l'intermédiaire de deux moyens de maintien, puis dans un second temps, le déflecteur est fixé au bouclier à la suite de la fixation du bouclier sur la caisse et de la libération du déflecteur des moyens de maintien, les moyens de maintien étant ensuite retirés. Chaque moyen de maintien a une première extrémité apte à être fixée sur un élément de caisse et une seconde extrémité apte à être fixée sur le déflecteur, et se présente sous la forme d'une tige ayant, à chaque extrémité, un crochet.

L'ensemble qui vient d'être décrit ne va pas sans inconvénients.

D'une part, la fixation du déflecteur sur le bouclier et le retrait des moyens de fixation sont délicates. En effet, l'accessibilité aux différents moyens de fixation et au crochet du moyen de maintien, situés à la hauteur du déflecteur, font que l'opérateur travaille quasiment à l'aveugle. L'opération de fixation du déflecteur est encore plus critique lorsque l'opérateur doit utiliser des outils tels que des clefs plates ou Allen et/ou lorsque les opérations de fixation et retrait sont réalisées sur un véhicule dont la hauteur sous capot est élevée, par exemple sur un véhicule de type monospace, ludospace ou fourgon. Par conséquent, ces opérations s'avèrent coûteuses en temps, au détriment de la productivité.

Outre les difficultés pour fixer le déflecteur sur le bouclier et pour retirer les moyens de maintien, ces opérations imposent à l'opérateur ou aux opérateurs des positions de travail inappropriées et non ergonomiques, sources d'accidents du travail lorsque ces positions sont répétées quotidiennement.

Un premier objectif est de proposer un ensemble comprenant une cloison solidaire d'une caisse et un déflecteur, cet ensemble permettant d'optimiser le temps nécessaire au montage du déflecteur.

Un deuxième objectif est de proposer un ensemble comprenant une cloison solidaire d'une caisse et un déflecteur, cet ensemble améliorant l'ergonomie pour les opérateurs lors du montage du déflecteur.

Un troisième objectif est de proposer un véhicule automobile comprenant un ensemble répondant aux objectifs ci-dessus exprimés.

A cet effet, il est proposé, en premier lieu, un ensemble comprenant :
- une cloison solidaire d'une caisse et placée entre un système de refroidissement et un bouclier ;
- un déflecteur comprenant un corps positionné sous la cloison; le déflecteur comprenant en outre une griffe articulée par rapport au corps du déflecteur, cette griffe étant apte à s'introduire au sein d'une ouverture pratiquée dans la cloison.

Diverses caractéristiques supplémentaires peuvent être prévues, seules ou en combinaison :
- la cloison est fixée au système de refroidissement ;
- la griffe comprend :
   - une âme faisant saillie sensiblement perpendiculairement d'un volet ;
   - une aile faisant saillie sensiblement perpendiculairement de l'âme de sorte que l'âme et l'aile forment un L ;
   l'âme étant apte à venir en contact avec un bord inférieur de l'ouverture, l'aile et le volet étant apte à venir de part et d'autre de la cloison ;
- l'aile est en regard d'un trou pratiquée dans le volet ;
- la griffe est mobile entre une position repos et une position d'accrochage dans laquelle l'aile et le volet sont sensiblement parallèles à la cloison ;
- la griffe est articulée par rapport à un îlot évidé du corps du déflecteur ;
- la griffe est articulée au travers d'une charnière obtenue par une réduction de l'épaisseur de la griffe ;
- le déflecteur et la griffe sont monobloc ;
- l'ensemble comprend une seconde cloison solidaire de la caisse et placée entre le système de refroidissement et le bouclier, le déflecteur comprenant une seconde griffe articulée par rapport au corps du déflecteur, cette seconde griffe étant apte à s'introduire au sein d'une ouverture pratiquée dans la seconde cloison.

Il est proposé, en deuxième lieu, un véhicule automobile comprenant un ensemble tel que décrit précédemment.

D'autres caractéristiques et avantages de l'invention apparaîtront plus clairement et de manière concrète à la lecture de la description ci-après de modes de réalisation, laquelle est faite en référence aux dessins annexés dans lesquels :
- la figure 1 est une vue en perspective d'un véhicule automobile comprenant un ensemble présentant un déflecteur et des cloisons ;
- la figure 2 est une vue en perspective de l'étape d'accrochage du déflecteur sur une caisse et plus précisément sur les cloisons solidaires de la caisse ;
- la figure 3 est une vue en perspective, selon une première orientation, du déflecteur accroché sur les cloisons ;
- la figure 4 est une vue en perspective, selon une deuxième orientation, du déflecteur monté sur les cloisons ;
- la figure 5 est une vue en perspective de l'étape de fixation du bouclier sur la caisse et le déflecteur accroché.

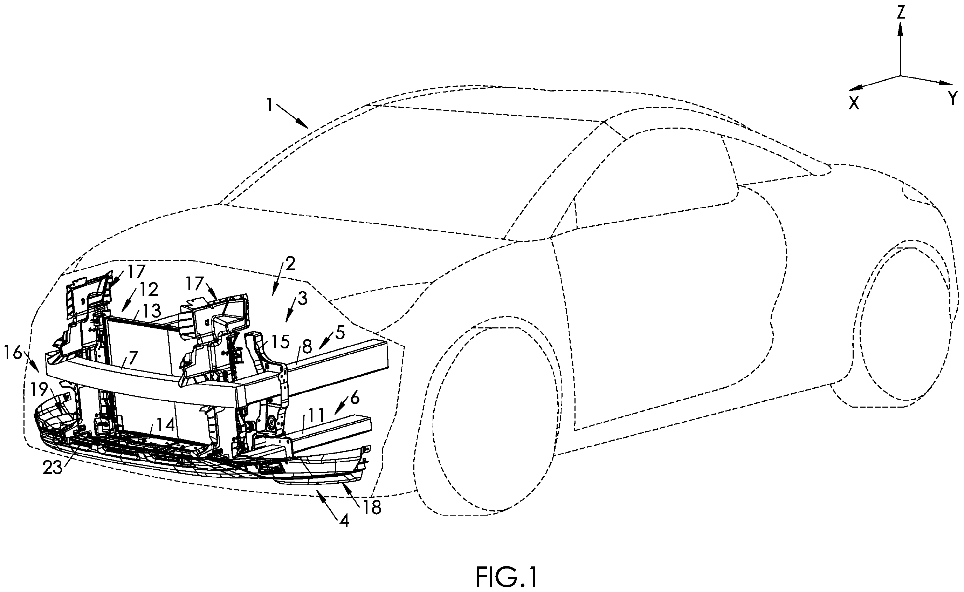

Sur la figure 1 est représenté un véhicule 1 automobile comprenant une caisse 2 comportant une structure 3 avant définissant un compartiment moteur délimité par un pare-chocs 4 avant.

On définit par rapport au véhicule 1 un repère orthogonal XYZ comprenant trois axes perpendiculaires deux à deux, à savoir :
- un axe X, définissant une direction longitudinale, horizontale, confondue avec la direction générale de déplacement du véhicule 1,
- un axe Y, définissant une direction transversale, horizontale, qui avec l'axe X définit un plan XY horizontal,
- un axe Z, définissant une direction verticale, perpendiculaire au plan XY horizontal.

Dans la suite de la description et en référence au repère défini ci-dessus, les termes « longitudinal » ou « longitudinalement » font référence à une direction confondue avec l'axe X, les termes « transversal » ou « transversalement » font référence à une direction confondue avec l'axe Y, et les termes « vertical » ou « verticalement » font référence à une direction confondue avec l'axe Z.

La structure 3 avant est délimitée latéralement et de manière symétrique par une aile, une doublure d'aile et un passage de roue (non représentés).

Selon le mode de réalisation illustré sur les figures, la structure 3 avant comprend en outre une voie 5 haute d'absorption des chocs et une voie 6 basse d'absorption des chocs.

La voie 5 haute d'absorption des chocs comprend une traverse 7 supérieure reliée aux extrémités de deux longerons 8, via des absorbeurs 9 de chocs. De la même manière, la voie 6 basse d'absorption des chocs comprend une traverse 10 inférieure reliée aux extrémités de deux prolonges 11, via des absorbeurs 9 de chocs.

Le véhicule 1 comprend, dans le compartiment moteur, notamment un groupe motopropulseur (ci-après référencé par l'acronyme GMP et non représenté sur les figures) et un système 12 de refroidissement, définissant une façade avant. Le GMP regroupe notamment un moteur et des dispositifs de transmission, permettant de transmettre la puissance générée par le moteur aux roues du véhicule. Le système 12 de refroidissement comprend notamment un groupe motoventilateur (ci-après référencé par l'acronyme GMV et non représenté sur les figures) et un radiateur 13, le système 12 de refroidissement ayant pour fonction première de refroidir un liquide de refroidissement circulant dans le moteur. Le radiateur 13 est en l'occurrence monté sur un support 14 transversal, ce support 14 étant fixé à chaque extrémité sur la voie 5 haute d'absorption des chocs, via une platine 15 verticale.

Le véhicule 1 comprend en outre un ensemble 16 comprenant :
- une cloison 17 solidaire de la caisse 2 et placée entre le système 12 de refroidissement et un bouclier 18 ;
- un déflecteur 19 comprenant un corps 20 positionné sous la cloison 17.

Le déflecteur 19 comprend une griffe 21 articulée par rapport au corps 20 du déflecteur 19, cette griffe 21 étant apte à s'introduire au sein d'une ouverture 22 pratiquée dans la cloison 17.

Plus précisément, selon l'exemple illustré sur les figures, l'ensemble 16 comprend deux cloisons 17 verticales fixées latéralement sur le système 12 de refroidissement, le déflecteur 19 comprenant deux griffes 21, chaque griffe 21 étant apte à s'introduire au sein de l'ouverture 22 de l'une des cloisons 17.

Selon l'exemple illustré, le bouclier 18 (également appelé peau extérieure et partiellement représenté) dissimule la traverse 7 supérieure et la traverse 10 inférieure des voies 5, 6 d'absorption des chocs. Le bouclier 18 comprend une bouche 23 d'entrée se présentant sous la forme d'une grille, apte à laisser passer l'air extérieur dans le système 12 de refroidissement.

Selon le mode de réalisation illustré sur les figures, les cloisons 17 verticales sont fixées latéralement sur le système 12 de refroidissement et autrement dit sur la façade avant, ces cloisons 17 étant également connues sous la dénomination "cloisons antirecyclage". Les cloisons 17 sont placées entre le système 12 de refroidissement et le bouclier 18, et permettent d'éviter que l'air chaud issu du moteur pénètre avec l'air extérieur dans le système 12 de refroidissement et nuise au bilan thermique du système 12 de refroidissement. Chaque cloison 17 épouse les éléments situés entre le bouclier 18 et le système 12 de refroidissement, tels que la traverse 7 supérieure et la traverse 10 inférieure, de sorte que le volume situé devant le système 12 de refroidissement soit isolé et ainsi que seul l'air en provenance de l'extérieur, via la bouche 23 d'entrée, pénètre dans le système 12 de refroidissement.

Chaque cloison 17 comprend une face 24 externe en regard des absorbeurs 9 des voies 5, 6 d'absorption des chocs, cette face 24 externe entourant l'ouverture 22 rectangulaire située en partie basse de la cloison 17. L'ouverture 22 comprend, dans une portion inférieure, un bord 25 inférieur. Les cloisons 17 sont par exemple réalisées en matériau polymère.

Le déflecteur 19 d'air est situé sous le pare-chocs 4 avant et plus précisément sous le bouclier 18 et les cloisons 17, ce déflecteur 19 permettant, lorsque le véhicule 1 est en mouvement, d'optimiser la circulation de l'air et ainsi de diminuer la trainée.

Selon le mode de réalisation illustré sur les figures, le déflecteur 19 comprend le corps 20 alvéolé et deux griffes 21, chaque griffe 21 comprenant d'une part un volet 26 articulé par rapport à un îlot 27 évidé du corps 20 via une charnière 28. Chaque griffe 21 comprend en outre une âme 29 faisant saillie sensiblement perpendiculairement au volet 26 et une aile 30 faisant saillie sensiblement perpendiculairement à l'âme 29, de sorte que l'âme 29 et l'aile 30 forment un L et que l'aile 30 soit en regard d'un trou 31 rectangulaire du volet 26.

La charnière 28 reliant l'îlot 27 et le volet 26 est obtenue par une réduction de l'épaisseur du volet 26 à proximité de l'îlot 27, ce type de charnière 28 étant connu sous la dénomination "charnière film".

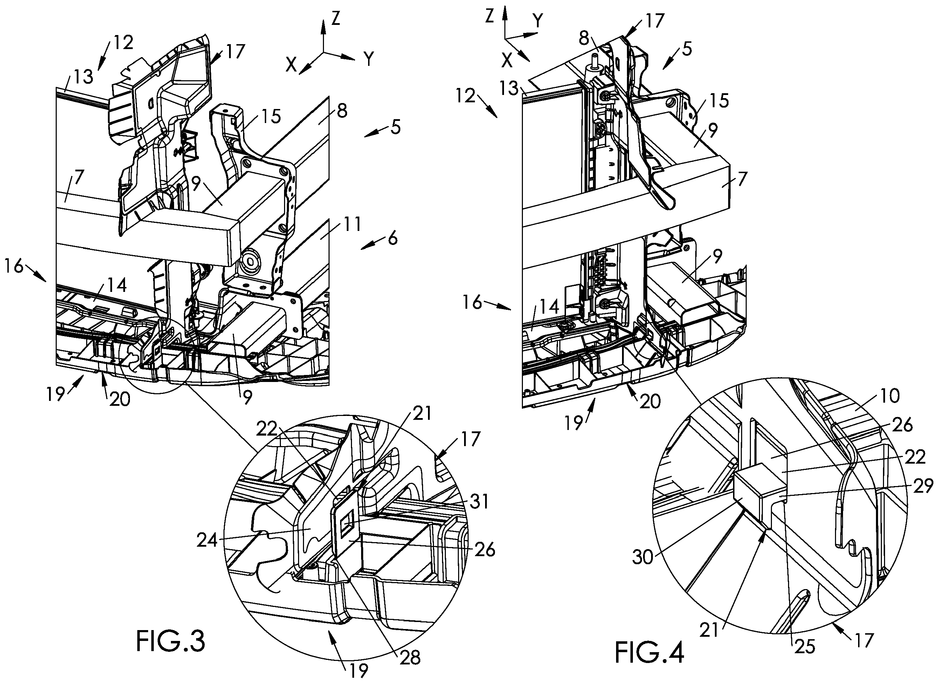

Chaque griffe 21 est mobile entre une position d'accrochage (illustrée sur les figures 3 et 4) dans laquelle l'aile 30 et le volet 26 sont en regard et sensiblement parallèles à la face 24 externe de la cloison 17, et une position repos.

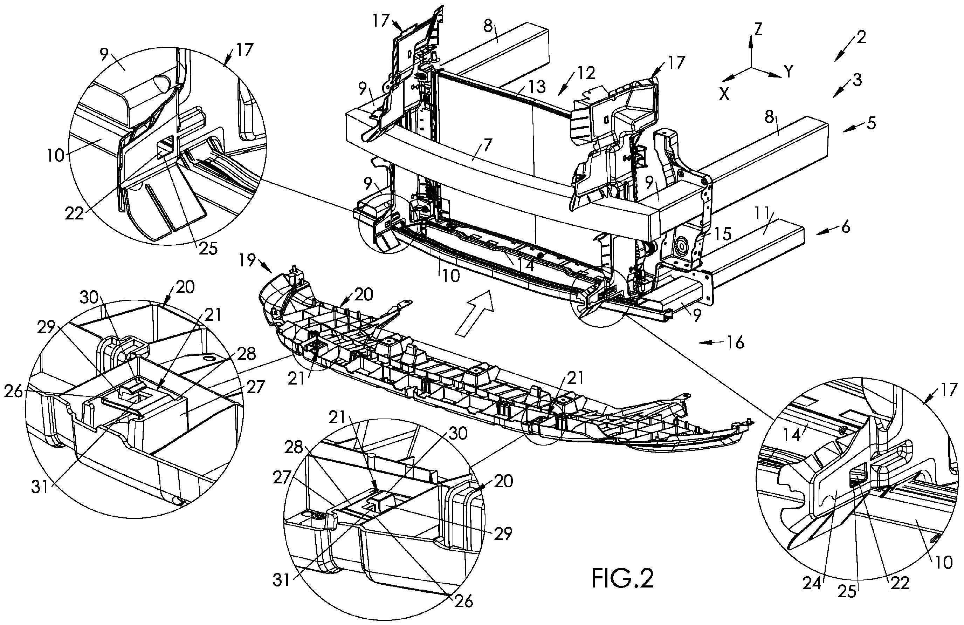

Selon le mode de réalisation illustré sur la figure 2, en position repos, l'aile 30 et le volet 26 d'une griffe 21 sont sensiblement perpendiculaires à la face 24 externe de la cloison 17.

Les griffes 21 et le corps 20 sont monobloc et par exemple réalisés en matériau polymère.

Selon un mode de réalisation non représenté, chaque griffe 21 est rapportée sur le corps 20.

Lors du montage d'un véhicule 1, le bouclier 18 et le déflecteur 19 sont montés sur un véhicule 1 en cours d'assemblage sur un même poste d'assemblage. Tel que représenté sur la figure 2, on entend par véhicule 1 en cours d'assemblage, un véhicule 1 comprenant une caisse 2 (comprenant entre autres une voie 5 haute d'absorption des chocs, une voie 6 basse d'absorption des chocs, des platines 15, un support 14) sur laquelle sont notamment montés un GMP, un système 12 de refroidissement, des cloisons 17.

Dans la suite de la description, nous allons décrire les différentes étapes nécessaires à la fixation d'un bouclier 18 avant et d'un déflecteur 19 sur une caisse 2 d'un véhicule 1 automobile.

Les différentes étapes peuvent être réalisées par un ou plusieurs opérateurs, manuellement ou à l'aide d'outils.

Initialement, le déflecteur 19 peut être fixé partiellement sur la structure 3 avant.

Premièrement, l'opérateur accroche le déflecteur 19 sur la caisse 2 et plus précisément sur les cloisons 17. En effet, l'opérateur introduit chaque griffe 21 articulée dans l'ouverture 22 de l'une des cloisons 17. Plus précisément, l'opérateur place chaque griffe 21 en position d'accrochage, puis il introduit chaque aile 30 au sein d'une ouverture 22, avant de descendre verticalement le déflecteur 19 de sorte que chaque griffe 21 soit dans une position dite accrochée (illustrée sur les figures 3 et 4), c'est à dire que la cloison 17 soit entre l'âme 29 et le volet 26 et que l'âme 29 soit en contact avec le bord 25 inférieur.

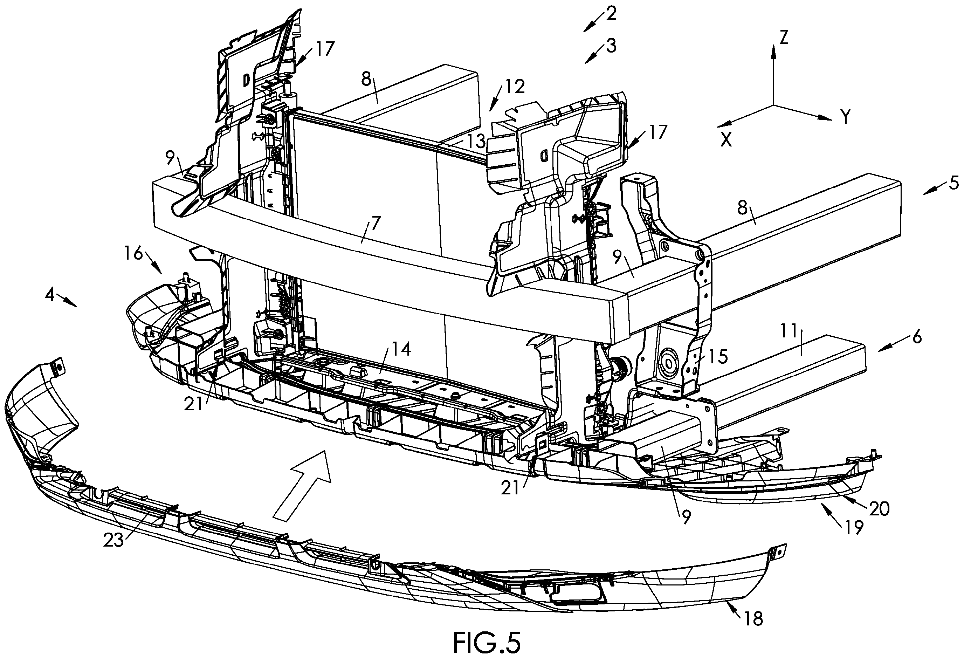

Deuxièmement, le bouclier 18 est fixé sur la caisse 2 et le déflecteur 19 accroché (illustré sur la figure 5).

A la suite de la fixation du bouclier 18, les griffes 21 restent en position accrochée. Lors de l'utilisation du véhicule 1, chaque griffe 21 reste donc mobile par rapport à la cloison 17.

L'ensemble 16 qui vient d'être décrit offre les avantages suivants.

Premièrement, le temps nécessaire au montage du déflecteur 19 est réduit. En effet, l'accrochage du déflecteur 19 sur les cloisons 17 est permanent, l'opérateur n'ayant plus à retirer des dispositifs de maintien à l'issue de la fixation du déflecteur 19. L'opérateur n'est plus ou quasiment plus dans l'obligation d'accéder au déflecteur 19 via le compartiment moteur pour réaliser le montage du déflecteur 19, au bénéfice de la productivité et de l'ergonomie pour l'opérateur.

Deuxièmement, la liaison entre la griffe 21 et la cloison 17 est une liaison partielle, puisque chaque griffe 21 reste mobile par rapport à la cloison 17 respective, ce type de liaison permettant notamment d'éviter d'avoir de fortes contraintes mécaniques au niveau de la cloison 17 lors d'un choc du déflecteur 19 avec par exemple un ralentisseur, réduisant ainsi les risques de casse du déflecteur 19.

Troisièmement, moyennant l'ajout de griffes 21 articulés et d'ouvertures 22, l'ensemble 16 est adaptable à tout type de véhicule.

## Revendications

1. Ensemble (16) comprenant :
- une cloison (17) solidaire d'une caisse (2) et placée entre un système (12) de refroidissement et un bouclier (18) ;
- un déflecteur (19) comprenant un corps (20) positionné sous la cloison (17) ;
**caractérisé en ce que** le déflecteur (19) comprend une griffe (21) articulée par rapport au corps (20) du déflecteur (19), cette griffe (21) étant apte à s'introduire au sein d'une ouverture (22) pratiquée dans la cloison (17).

2. Ensemble (16) selon la revendication 1, **caractérisé en ce que** la cloison (17) est fixée au système (12) de refroidissement.

3. Ensemble (16) selon l'une quelconque des revendications précédentes, **caractérisé en ce que** la griffe (21) comprend :
- une âme (29) faisant saillie sensiblement perpendiculairement d'un volet (26) ;
- une aile (30) faisant saillie sensiblement perpendiculairement de l'âme (29) de sorte que l'âme (29) et l'aile (30) forment un L ;
l'âme (29) étant apte à venir en contact avec un bord (25) inférieur de l'ouverture (22), l'aile (30) et le volet (26) étant apte à venir de part et d'autre de la cloison (17).

4. Ensemble (16) selon la revendication 3, **caractérisé en ce que** l'aile (30) est en regard d'un trou (31) pratiquée dans le volet (26).

5. Ensemble (16) selon l'une des revendications 3 ou 4, **caractérisé en ce que** la griffe (21) est mobile entre une position repos et une position d'accrochage dans laquelle l'aile (30) et le volet (26) sont sensiblement parallèles à la cloison (17).

6. Ensemble (16) selon l'une des revendications précédentes, **caractérisé en ce que** la griffe (21) est articulée par rapport à un îlot (27) évidé du corps (20) du déflecteur (19).

7. Ensemble (16) selon l'une des revendications précédentes, **caractérisé en ce que** la griffe (21) est articulée au travers d'une charnière (28) obtenue par une réduction de l'épaisseur de la griffe (21).

8. Ensemble (16) selon l'une des revendications précédentes, **caractérisé en ce que** le déflecteur (19) et la griffe (21) sont monobloc.

9. Ensemble (16) selon l'une des revendications précédentes, **caractérisé en ce que** l'ensemble (16) comprend une seconde cloison (17) solidaire de la caisse (2) et placée entre le système (12) de refroidissement et le bouclier (18), le déflecteur (19) comprenant une seconde griffe (21) articulée par rapport au corps (20) du déflecteur (19), cette seconde griffe (21) étant apte à s'introduire au sein d'une ouverture (22) pratiquée dans la seconde cloison (17).

10. Véhicule (1) automobile comprenant un ensemble (16) selon l'une des revendications 1 à 9.

## Patentansprüche

1. Einheit (16), die Folgendes umfasst:
- eine Wand (17), die fest mit einer Karosserie (2) verbunden und zwischen einem Kühlsystem (12) und einem Schild (18) platziert ist;
- einen Deflektor (19), der einen Körper (20) umfasst, der unter der Wand (17) positioniert ist;
**dadurch gekennzeichnet, dass** der Deflektor (19) eine Klaue (21) umfasst, die bezüglich des Körpers (20) des Deflektors (19) angelenkt ist, wobei diese Klaue (21) geeignet ist, sich in eine Öffnung (22) zu fügen, die in der Wand (17) angelegt ist.

2. Einheit (16) nach Anspruch 1, **dadurch gekennzeichnet, dass** die Wand (17) an dem Kühlsystem (12) befestigt ist.

3. Einheit (16) nach einem der vorstehenden Ansprüche, **dadurch gekennzeichnet, dass** die Klaue (21) Folgendes umfasst:
- eine Seele (29), die im Wesentlichen senkrecht von einer Klappe (26) vorragt;
- einen Kotflügel (30), der im Wesentlichen senkrecht von der Seele (29) derart vorragt, dass die Seele (29) und der Kotflügel (30) ein L bilden;
wobei die Seele (29) geeignet ist, mit einem unteren Rand (25) der Öffnung (22) in Berührung zu kommen, wobei der Kotflügel (30) und die Klappe (26) geeignet sind, zu beiden Seiten der Wand (17) zu kommen.

4. Einheit (16) nach Anspruch 3, **dadurch gekennzeichnet, dass** der Kotflügel (30) einem Loch (31), das in der Klappe (26) angelegt ist, gegenüberliegt.

5. Einheit (16) nach einem der Ansprüche 3 oder 4, **dadurch gekennzeichnet, dass** die Klaue (21) zwischen einer Ruheposition und einer Anhängposition, in der der Kotflügel (30) und die Klappe (26) im Wesentlichen zu der Wand (17) parallel sind, beweglich ist.

6. Einheit (16) nach einem der vorstehenden Ansprüche, **dadurch gekennzeichnet, dass** die Klaue (21) bezüglich einer ausgehöhlten Insel (27) des Körpers (20) des Deflektors (19) angelenkt ist.

7. Einheit (16) nach einem der vorstehenden Ansprüche, **dadurch gekennzeichnet, dass** die Klaue (21) durch ein Scharnier (28) hindurch angelenkt ist, das durch eine Reduzierung der Stärke der Klaue (21) erhalten wird.

8. Einheit (16) nach einem der vorstehenden Ansprüche, **dadurch gekennzeichnet, dass** der Deflektor (19) und die Klaue (21) einstückig sind.

9. Einheit (16) nach einem der vorstehenden Ansprüche, **dadurch gekennzeichnet, dass** die Einheit (16) eine zweite Wand (17) umfasst, die mit der Karosserie (2) fest verbunden und zwischen dem Kühlsystem (12) und dem Schild (18) platziert ist, wobei der Deflektor (19) eine zweite Klaue (21), die bezüglich des Körpers (20) des Deflektors (19) angelenkt ist, umfasst, wobei diese zweite Klaue (21) geeignet ist, sich in eine Öffnung (22), die in der zweiten Wand (17) angelegt ist, einzufügen.

10. Kraftfahrzeug (1), das eine Einheit (16) nach einem der Ansprüche 1 bis 9 umfasst.

## Claims

1. Assembly (16) comprising:
- a partition wall (17) secured to a vehicle body (2) and placed between a cooling system (12) and an apron (18);
- a deflector (19) comprising a structure (20) positioned under the partition wall (17);
**characterized in that** the deflector (19) is provided with a claw (21) hinged relative to the structure (20) of the deflector (19), said claw (21) being suitable for being inserted into an opening (22) provided in the partition wall (17).

2. Assembly (16) according to claim 1, **characterized in that** the partition wall (17) is fastened to the cooling system (12).

3. Assembly (16) according to any preceding claim, **characterized in that** the claw (21) comprises:
- a web (29) projecting substantially perpendicularly from a flap (26); and
- a wing (30) projecting substantially perpendicularly from the web (29) in such a manner that the web (29) and the wing (30) form an L-shape;
the web (29) being suitable for coming into contact with a lower edge (25) of the opening (22), and the wing (20) and the flap (26) being suitable for coming to extend on either side of the partition wall (17).

4. Assembly (16) according to claim 3, **characterized in that** the wing (30) extends facing a hole (31) provided in the flap (26).

5. Assembly (16) according to claim 3 or claim 4, **characterized in that** the claw (21) is mounted to move between a rest position and an attachment position in which the wing (30) and the flap (26) are substantially parallel to the partition (17).

6. Assembly (16) according to any preceding claim, **characterized in that** the claw (21) is hinged relative to a hollow island (27) in the structure (20) of the deflector (19).

7. Assembly (16) according to any preceding claim, **characterized in that** the claw (21) is hinged through a hinge (28) obtained by a reduction in the thickness of the claw (21).

8. Assembly (16) according to any preceding claim, **characterized in that** the deflector (19) and the claw (21) are formed integrally in one piece.

9. Assembly (16) according to any preceding claim, **characterized in that** the assembly (16) further comprises a second partition wall (17) secured to the vehicle body (2) and placed between the cooling system (12) and the apron (18), the deflector (19) being provided with a second claw (21) hinged relative to the body (20) of the deflector (19), said second claw (21) being suitable for being inserted into an opening (22) provided in the second partition wall (17).

10. Automotive vehicle (1) including an assembly (16) according to any of claims 1 to 9.
